# EUROPEAN PATENT SPECIFICATION

(11) **EP 3 573 194 B1**
(45) Date of publication and mention of the grant of the patent: **02.04.2025**
(21) Application number: 18741039.4
(22) Date of filing: 23.01.2018
(51) Int. Cl.: H01R 13/434, H01R 13/631, H01R 13/17, H01R 13/24, B60L 53/80, B60L 53/16, H01R 13/08

(54) **ELASTIC POLE, COMBINED MEMBER, HIGH-VOLTAGE ASSEMBLY, ELECTRICAL CONNECTOR, AND BATTERY CHARGING BOARD**
ELASTISCHER POL, KOMBINIERTES ELEMENT, HOCHSPANNUNGSANORDNUNG, ELEKTRISCHER VERBINDER UND BATTERIELADEPLATTE
PÔLE ÉLASTIQUE, ÉLÉMENT COMBINÉ, ENSEMBLE HAUTE TENSION, CONNECTEUR ÉLECTRIQUE ET CARTE DE CHARGE DE BATTERIE

(30) Priority: 23.01.2017 CN 201710050225; 23.01.2017 CN 201710050417; 23.01.2017 CN 201720091235 U; 23.06.2017 CN 201710487668
(43) Date of publication of application: 27.11.2019
(73) Proprietor: Shanghai Dianba New Energy Technology Co., Ltd., Shanghai 201308 (CN); Aulton New Energy Automotive Technology Group, Shanghai 201315 (CN)
(72) Inventor: ZHANG, Jianping, Shanghai 201308 (CN); HUANG, Chunhua, Shanghai 201308 (CN); QIU, Danliang, Shanghai 201308 (CN); ZHOU, Junqiao, Shanghai 201308 (CN); ZOU, Rui, Shanghai 201308 (CN); LI, Xiaodong, Shanghai 201308 (CN)
(74) Representative: Gruber, Philipp
(86) International application number: PCT/CN2018/073747
(87) International publication number: WO 2018/133871

(56) References cited:
- EP-B1- 3 553 893
- CN-A- 102 683 936
- CN-A- 105 185 943
- CN-A- 106 207 542
- CN-A- 106 299 782
- CN-A- 106 299 782
- CN-A- 106 328 878
- CN-U- 202 534 729
- CN-U- 202 772 633
- CN-U- 202 772 633
- CN-U- 203 013 995
- CN-U- 203 466 364
- CN-U- 205 985 557
- CN-U- 206 558 797
- CN-U- 207 165 831
- JP-A- 2011 187 282
- US-A1- 2009 075 508
- US-A1- 2010 255 686

## Description

### FIELD

The present disclosure relates to a field of charging of electric vehicles, and more particularly, to a pole component, a high-voltage assembly and an electrical connector.

### BACKGROUND

A battery for an existing electric vehicle is generally installed in a fixed manner or in a replaceable manner. As for the fixed manner, the battery is generally fixed to the vehicle, and the vehicle is directly used as a charging target during charging. As for the replaceable manner, the battery is generally detachable, that is, the battery can be removed at any time for replacement or for charging and can be mounted to a vehicle body after the replacement or charging.

When the battery is charged, the battery is connected to an external power source by means of a corresponding electrical connector. The electrical connector needs to keep in contact with the battery during the whole charging period. All the existing charging plugs are of fixed structures and have no active adjustment. Once the battery moves or waggles, charging contact points may deviate, resulting in interruption in charging. In addition, due to a large size of the battery, when its charging interface is in contact with the electrical connector, they cannot always align accurately, or the battery may move after the alignment, which both influence a charging effect. Furthermore, the existing electrical connector employs a fixed plug for connection with the battery, and the plug is easy to damage when pressed in a vertical direction. High and low voltage wires in the electrical connector are fixed outlet wires with rigid connection at terminals, the contact points may be disconnected under various influences, such as environment, temperature, and vibration of the vehicle body, resulting in unstable electrical connection, and even abnormalities such as failure of electrical connection or burnout.

In addition, the charging manner for a replaceable battery usually works in this way that the battery is removed and put in a designated location, and then is manually connected to a charging device. This manner needs manual work at any time, which increases work intensity and is unsuitable for fast-paced line production.

Application CN 105 185 943 A discloses a quick connecting device of a power battery for an electric vehicle. The quick connecting device comprises an insulation base, two pole terminals and a limiting device, wherein the two pole terminals are arranged on the insulation base in a penetrating way along the vertical direction; the limiting device is used for limiting the displacement stroke of the pole terminals on the insulation base in the vertical direction; gaps are arranged between the pole terminals and the insulation base.

Application CN 102 683 936 A discloses a structure of a plane connector of a power conversion and charging system of an electric vehicle. The structure is characterized in that all high-voltage electrodes and low-voltage electrodes of the plane connector of the power conversion and charging system of the electric vehicle are all arranged on an integral installing seat; an external cable is connected onto a switching seat separated from the integral installing seat; meanwhile, at least one high-voltage electrode is connected with a flexible lead; and the other end of the flexible lead is connected onto the switching seat and is connected with the external cable by the switching seat.

Application CN 106 207 542 A discloses a floating type end face contact connector. The connector comprises a bottom plate and a contact cavity. Supporting plates are arranged on the bottom plate. The supporting plates and the bottom plate form a groove. A first long-strip-shaped installation hole is formed in the middle of the bottom plate. Positioning pins are arranged at the four corners of the bottom plate respectively. A contact cavity flat plate is installed in the groove, and a second long-strip-shaped installation hole is formed in the middle of the contact cavity flat plate. An insulator is arranged in the contact cavity, and the insulator is internally provided with a large contact and a small contact.

Application US 2010/255686 A1 discloses a connector assembly for coupling an electric motor to a power source. The power source comprises a first conductive member. The connector assembly comprises a non-conductive member having an inner channel configured to receive at least a portion of the first conductive member, a second conductive member slidably disposed within the inner channel, coupled to the electric motor, and configured to be coupled to, and to receive a force having a first direction from, the first conductive member, and a spring member, retained between the non-conductive member and the second conductive member and configured to resist movement of the second conductive member in the first direction.

Application CN 202 772 633 U discloses an electric car vehicle-mounted power cell charging platform. The platform comprises a support and an installing pedestal for installing a charging pole column; a bracket for placing a vehicle-mounted power cell is arranged on the support through an elastic mechanism, the installing pedestal can be movably arranged on the bracket; a guiding mechanism is arranged on the support. When the vehicle-mounted power cell is arranged on the bracket, the installing pedestal is guided by the guiding mechanism to move toward the vehicle-mounted power cell.

Application US 2009/075508 A1 discloses a pole component relating to the preamble of claim 1, in particular a connector with a first coupling device with a first connection for a first electrical cable and a second coupling device with a second connection for a second electrical cable and wherein both coupling devices are interlocking for electrical contact. The second coupling device includes a first component to contact the first coupling device by interlocking, a second component that includes the second connection, and a coupling device for electrical coupling of the first component with the second component, wherein both components are flexible relative to each other in radial and/or axial direction.

### SUMMARY

The present disclosure aims to overcome a defect in the related art that a charging contact point is easily displaced when a battery is charged. Accordingly, the present disclosure provides a pole component as defined in claim 1, a high-voltage assembly as defined in claim 10, and an electrical connector as defined in claim 12.

The present disclosure provides an elastic pole in an embodiment which does not fall within the subject-matter of the claimed invention.

The elastic pole includes: a pole body having an electrical contact terminal for contact with another electrical contact terminal to establish electrical connection and a cable connecting terminal for connection with a power cable, the electrical contact terminal and/or the cable connecting terminal being provided with a limiting member configured to mount the pole body on a pole mounting seat in a limiting manner; and an elastic member fitted over an outer surface of the pole body, located between the electrical contact terminal and the cable connecting terminal, and configured to cooperate with the limiting member to floatingly mount the pole body on the pole mounting seat.

Preferably, the limiting member includes a snap ring, the electrical contact terminal and/or the cable connecting terminal of the pole body has a groove into which the snap ring is snapped, and the snap ring inserted into the groove has an outer diameter larger than an outer diameter of the pole body to limit the elastic member to the pole body.

Preferably, the pole is a high-voltage pole, and a diameter of an electrical contact terminal of the high-voltage pole is larger than a diameter of a cable connecting terminal thereof, the snap ring is arranged at an end of the cable connecting terminal of the high-voltage pole, the elastic member is pressed and fixed to the pole body between the electrical contact terminal and the snap ring; or the pole is a low-voltage pole, an end of an electrical contact terminal of the low-voltage pole and an end of a cable connecting terminal thereof are both provided with a snap ring, and the elastic member is pressed and fixed between snap rings at two ends.

Preferably, the elastic member is a spring.

Preferably, the cable connecting terminal has a cable clamping groove recessed along an axis of the pole body, and the cable clamping groove is configured to mount a power cable.

The present disclosure further provides a pole component according to the invention as claimed. The pole component includes a pole, a conductive joint, and at least one conductive elastic member, wherein the pole has two ends provided with a first electrical connecting portion and a second electrical connecting portion respectively, the first electrical connecting portion is electrically connected to the conductive elastic member, the conductive joint includes a flexible member and a first contact, and the first contact has a first end connected to the flexible member and a second end electrically connected to the second electrical connecting portion.

Preferably, the pole component includes a pole plate having a receiving chamber, each of two ends of the receiving chamber defines a guiding hole, the pole runs through the receiving chamber, and two ends of the pole are exposed out of two guiding holes. In the solution, by means of the two guiding holes, the pole can only move in a direction defined by the two guiding holes and hence be limited, thereby preventing offset and malposition of the pole, and improving stability of the electrical connection.

Preferably, the pole has an end adjacent to the conductive joint, and the end has an outer wall provided with a limiting portion, the limiting portion has a first end connected to an outer surface of the pole and a second end extending and protruding in a radial direction of the pole, and the limiting portion is located outside the receiving chamber and abuts an outer surface of the receiving chamber. In the solution, with the above structure, the limiting portion can prevent the pole from falling off the pole plate, and ensure that the pole always runs through the two guiding holes. In addition, during movement of the pole, the limiting portion effectively prevents the pole from moving in a direction of the first electrical connecting portion, such that disengagement between the pole and the conductive joint can be prevented, and the stability of electrical connection between the pole and the conductive joint can be improved.

Preferably, the pole has an outer wall provided with an annular groove, and the limiting portion is a snap ring embedded in the annular groove. In the solution, with the above structure, the pole can be easily mounted to and dismounted from the pole plate and has a simple structure.

Preferably, the pole has the outer wall provided with a protrusion, the protrusion extends and protrudes outwardly in the radial direction of the pole, the protrusion runs through the guiding hole, the pole component includes an elastic body, the elastic body is located in the receiving chamber and located between the limiting portion and the protrusion, and the elastic body has two ends abutting an inner wall of the receiving chamber and the protrusion respectively. In the solution, with the above structure, a force along the first electrical connecting portion is exerted on the pole by the elastic body, and the first electrical connecting portion can retract under stress upon contact, thereby reducing rigid impact on the first electrical connecting portion. The floating connection can be achieved during the electrical connection, desired contact of the first electrical connecting portion is ensured, and the stability of the electrical connection of the first electrical connecting portion is greatly improved.

Preferably, the elastic body is a reset spring, and the pole runs through the reset ring. In the solution, with the above structure, the reset spring has high elasticity and good property, and is easy to restore. In addition, the pole is subjected to uniform force, and offset and malposition of the pole can be effectively prevented.

Preferably, the pole component includes an insulating bush, the insulating bush is connected to the pole plate and defines a cavity therein, and the conductive joint is located in the cavity. In the solution, with the above structure, the insulating bush protects, insulates, and seals the conductive joint well, thereby improving safety and reliability of the electrical connector.

Preferably, the insulating bush is provided with a wavy portion, and/or the insulating bush is connected to the pole plate by snapping. In the solution, with the wavy portion, the insulating bush has good flexibility, deformability of the insulating bush can be improved, and the insulating bush can insulate and seal the conductive joint in an improved way. The insulating bush is easy to mount on and dismount from the pole plate by a snapping connection.

Preferably, the first electrical connecting portion is provided with at least one placing chamber, the conductive elastic member has a contact portion and a pressing portion, the pressing portion is mounted in the placing chamber, and the contact portion is exposed out of an outer surface of the first electrical connecting portion. In the solution, with the above structure, the conductive elastic member is pressed and mounted on the first electrical connecting portion to achieve floating connection of the pole and a more stable electrical connection.

Preferably, the conductive elastic member is a first conductive spring.

According to this invention, the flexible member includes a cavity body, and the cavity body is made of a flexible conductive material. In the solution, with the above structure, when the conductive joint is employed, the cavity body can be stretch and compressed, or twisted in the radial direction, to adapt relative displacement of connection between the structures, performance of the electrical connection can be prevented from getting worse due to changes of relative displacement, stability of electrical connection of the pole component is greatly improved.

According to this invention, the conductive joint further includes a second contact, the flexible member has two ends connected to the first contact and the second contact respectively, and the flexible member further includes a spring located in the cavity body. In the solution, with the above structure, structural strength of the conductive joint is effectively enhanced by the spring, such that electrical connection of the conductive joint can be ensured even relative displacement of two ends the flexible member changes. In addition, the spring is conductive, which further improves stability of the electrical connection between the first contact and the second contact.

More preferably, the cavity body is crimped or welded to the first contact and the second contact. In the solution, with the above structure, strength of structural connection of the conductive joint is enhanced and the stability of electrical connection of the conductive joint is ensured.

Preferably, at least one second conductive spring is provided and pressed between the pole and the first contact. In the solution, with the above structure, the pole is floatingly connected to the first contact by the second conducive spring, thereby improving stability of electrical connection between the pole and the conductive joint.

Preferably, the second electrical connecting portion is provided with a first cavity portion, the first contact has an outer wall provided with at least one first annular spring groove, and the second conductive spring is provided and pressed between the first cavity portion and the first annular spring groove. In the solution, with the above structure, the second conducive spring is pressed and mounted between the pole and the conductive joint, achieving stable electrical connection.

The present disclosure further provides a high-voltage assembly. The high-voltage assembly includes the above pole component and a high-voltage pin. The high-voltage pin is electrically connected to the conductive joint, at least one conductive elastic body is provided and pressed between the high-voltage pin and the conductive joint, and the conductive elastic body is used to maintain electrical connection between the high-voltage pin and the conductive joint in case of floating between the high-voltage pin and the conductive joint. In the solution, with the above structure, the high-voltage pin is floatingly connected to the conductive joint by the conductive elastic body, thereby improving the stability of the electrical connection between the high-voltage pin and the conductive joint.

Preferably, the high-voltage pin is connected to the conductive joint by means of a socket, two ends of the socket are each provided with a second cavity portion, an outer wall of the high-voltage pin and an outer wall of the conductive joint each define at least one second annular spring groove, and the conductive elastic body is pressed between the second cavity portion and the second annular spring groove. In the solution, with the above structure, strength of mounting connection of the conductive elastic body is effectively enhanced, and the electrical connection is more stable.

Optionally, the conductive elastic body is a third conductive spring.

The present disclosure further provides an electrical connector. The electrical connector includes the above high-voltage assembly.

The present disclosure further provides another electrical connector in an embodiment which does not fall within the subject-matter of the claimed invention.

The electrical connector includes the above elastic pole.

Preferably, the electrical connector further includes: a baseplate configured to provide a mounting base, and a floating plate movably mounted to a surface of the baseplate by means of an elastic member, the elastic pole for electrical connection being mounted to the floating plate.

Preferably, the elastic pole is mounted to the floating plate by means of a pole mounting plate, the pole mounting plate defines a mounting hole, and the elastic pole runs through the mounting hole and is mounted in the mounting hole by means of a limiting member.

Preferably, the pole mounting plate is further provided with positioning columns, the positioning columns are mounted at two ends of the pole mounting plate and configured to limit a position where the elastic pole is in contact with a battery, each of the positioning columns has a first end fixed to the pole mounting plate and a second end configured as a tapered end, and a baffle is provided between the two ends and protrudes from the pole body; and/or the pole mounting seat is mounted on the floating plate by means of a screw.

Preferably, an edge of the baseplate and an edge of the floating plate are provided with a holder for mounting the elastic member, the holder includes a first fixing block provided around a baseplate mounting opening and a second fixing block provided on the floating plate and opposite to the first fixing block, and the elastic member is clamped and fixed by the first fixing block and the second fixing block from two ends.

Preferably, the floating plate is movably connected to the baseplate by means of a guiding member, the guiding member includes a guiding sleeve and a guiding screw, the guiding sleeve is mounted on the baseplate, and the guiding screw runs through the floating plate to be threadedly connected to the guiding sleeve.

More preferably, the floating plate is provided with a plurality of bumps on a side facing the baseplate, such that the floating plate can be spaced apart from the baseplate, or the pole mounting plate is provided with a boss on a side mounted with the elastic pole, the elastic pole is mounted on the boss, the pole mounting plate defines a groove recessed towards the boss on the other side, a closing plate is mounted on a surface of the groove, and the closing plate and the boss defines an accommodating space for accommodating the elastic pole.

Preferably, the baseplate and the floating plate define a baseplate mounting opening and a floating plate mounting opening respectively at positions corresponding to the pole mounting plate, and the cable connecting terminal of the elastic pole runs through the baseplate mounting opening and the floating plate mounting opening.

The present disclosure further provides a battery charging board for an electric vehicle in an embodiment which does not fall within the subject-matter of the claimed invention.

The battery charging board includes: an upper frame assembly configured to place a battery, and including an upper frame; a lower frame assembly located under the upper frame assembly, configured to elastically support the upper frame, and including a lower frame and an elastic device arranged on an upper surface of the lower frame; and a floating charging plate mounted on an end of the upper frame, configured to charge the battery, and including a mounting seat movably connected to the upper frame and the lower frame, and the electrical connector mounted on the mounting seat as described above.

Preferably, the mounting seat is connected to the upper frame by means of a slide rail device and connected to the lower frame by means of an orienting device; the slide rail device and the orienting device cooperate with each other to move the floating charging plate towards the battery to establish electrical insertion.

Preferably, the slide rail device includes a slide rail mounted on an upper surface of the upper frame and a sliding block fixedly mounted to a lower surface of the mounting seat in a corresponding position, and the sliding block defines a sliding slot fitted with the slide rail.

Preferably, the orienting device includes a pulley base provided to the lower surface of the mounting seat and having a pulley, and an orientation limiting base mounted on the upper surface of the lower frame and having an oblique groove, the oblique groove inclines in a direction identical to a direction of the slide rail, and the pulley is mounted in the oblique groove.

Preferably, the elastic device is a spring arranged on the upper surface of the lower frame, and a fixing cartridge for mounting and limiting the spring is provided in a corresponding position of a lower surface of the upper frame.

Preferably, the upper surface of the lower frame is provided with a limiting device to limit a downward moving track of the upper frame assembly, and the limiting device includes a limiting plate mounted on the lower frame assembly and having a longitudinal sliding groove, and a limiting rod provided to the upper frame and inserted in the longitudinal sliding groove.

Preferably, the limiting device further includes a positioning rod provided to the lower surface of the upper frame and a positioning base provided on the upper surface of the lower frame in a corresponding position, the positioning rod being inserted into the positioning base.

Preferably, a supporting plate is mounted above the upper frame assembly to limit movement of the battery, and the supporting plate is movably placed on the upper surface of the upper frame.

Preferably, a lower surface of the supporting plate is provided with an L-shaped right-angle mounting bar, the upper surface of the upper frame is provided with a stepped snapping plate, and the supporting plate is snapped to the snapping plate by means of the L-shaped right-angle mounting bar.

Preferably, the electrical connector is a floating electrical connector floatingly mounted on the mounting seat.

Various preferable embodiments can be achieved by arbitrary combination of the above preferable conditions according with the common knowledge in the art.

The positive advanced effects are reflected as follows.

According to the elastic pole of the present disclosure, the pole body is movably mounted on an assigned part and cannot escape from the mounting position due to a limiting member snapped into the annular groove. Meanwhile, the spring always exerts the elastic force on the pole body for maintaining a current state by means of cooperation with the assigned part. When in contact with a charging jack of a battery to be charged, the pole body can retract under stress, thereby achieving good contact effect with reduction in rigid impact.

According to the pole component and the high-voltage assembly of the present disclosure, the floating connections at two ends of the pole can be achieved by means of the conductive elastic body and the flexible member, abnormal situations, such as failure on the electrical connection, overburning, etc., due to loose connection can be effectively prevented, and the stability of the electrical connection in the electrical connector is improved.

According to the electrical connector of the present disclosure, an elastic fixation is provided between the floating plate and the baseplate, the floating plate can horizontally move relative to the baseplate to adapt to longitudinal movement of the battery. In addition, the elastic pole capable of retracting is inserted to the battery to adapt to lateral movement of the battery. With the present disclosure, stable electrical contact can be maintained all along in case of movement or waggle of the battery, improving charging effect.

According to the battery charging board of the present disclosure, the upper frame assembly, the lower frame assembly and the floating charging plate make a battery automatically move to charge after placement, insertion connection between the floating charging plate and the battery to be charged can be achieved automatically by means of cooperation among the interacting three during movement, such that the battery to be charged can be charged automatically. With the embodiment, the battery for an electric vehicle can be automatically charged completely without manual work, automatic processing during the whole charging period can be improved, and the charging efficiency can be increased. In addition, a plurality of battery charging boards cam be provided to automatically charge a plurality of batteries placed at any time, achieving line charging work for replaced batteries in bulk.

### BRIEF DESCRIPTION OF THE DRAWINGS

Fig. 1 is a schematic view of an elastic pole according to an example of a first preferred embodiment of the present disclosure.
Fig. 2 is a schematic view of a high-voltage pole according to an example of the first preferred embodiment of the present disclosure.
Fig. 3 is a schematic view of a low-voltage pole according to an example of the first preferred embodiment of the present disclosure.
Fig. 4 is a schematic view of a floating electrical connector according to an example of the first preferred embodiment of the present disclosure.
Fig. 5 is a schematic view of an internal structure of an electrical connector according to a second preferred embodiment of the present disclosure.
Fig. 6 is a schematic view of an internal structure of a pole component of the electrical connector according to this invention as claimed.
Fig. 7 is a schematic view of a conductive head of the pole component of the electrical connector according to this invention as claimed.
Fig. 8 is a schematic view of an internal structure of the conductive head of the pole component of the electrical connector according to this invention as claimed.
Fig. 9 is a schematic view of an electrical connector according to an example of a third preferred embodiment of the present disclosure.
Fig. 10 is a schematic view of a baseplate in Fig. 9.
Fig. 11 is a schematic view of a floating plate in Fig. 9.
Fig. 12 is a schematic view of a pole mounting plate in Fig. 9.
Fig. 13 is a back view of Fig. 12.
Fig. 14 is a schematic view of a closing plate according to an example of the third preferred embodiment of the present disclosure.
Fig. 15 is a schematic view about mounting a closing plate according to an example of the third preferred embodiment of the present disclosure.
Fig. 16 is a schematic view about mounting an elastic pole on a pole mounting plate according to an example of the third preferred embodiment of the present disclosure.
Fig. 17 is a schematic view of a positioning column according to an example of the third preferred embodiment of the present disclosure.
Fig. 18 is a sectional view taken along line D-D in Fig. 9.
Fig. 19 is a schematic view of a high-voltage pole according to an example of the third preferred embodiment of the present disclosure.
Fig. 20 is a schematic view of a low-voltage pole according to an example of the third preferred embodiment of the present disclosure.
Fig. 21 is a sectional view taken along line A-A in Fig. 9.
Fig. 22 is a sectional view taken along line B-B in Fig. 9.
Fig. 23 is a schematic view of a battery charging board according to an example of a fourth preferred embodiment.
Fig. 24 is a schematic view of a supporting plate according to an example of the fourth preferred embodiment.
Fig. 25 is a schematic view of a bottom of an upper frame according to an example of the fourth preferred embodiment.
Fig. 26 is a schematic view of a lower frame according to an example of a fourth preferred embodiment.

### DETAILED DESCRIPTION

The present disclosure will be described hereafter via embodiments and shall not be construed to be limited within the scope of the embodiments. Moreover, embodiments that are not according to the invention are presented for illustration purposes only.

### Embodiment 1

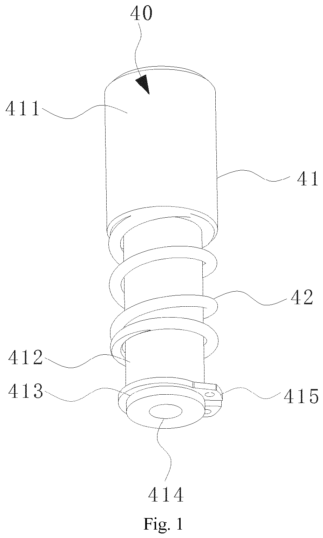

As shown in Fig. 1, in an example of an embodiment which does not fall within the subject-matter of the claimed invention, an elastic pole 40 generally includes a pole body 41 and a spring 42.

The pole body 41 has a first end configured as an electrical contact terminal 411 for contact with a battery, and a second end configured as a cable connecting terminal 412 for connection with a power supply line. The pole body 41 has an end outer surface defining an annular groove 413. The contact terminal 411 can be in a planar shape to increase a contact area. The annular groove 413 can be used to mount a limiting member, such that the elastic pole 40 is mounted on a pole mounting seat 50 in a limiting manner.

The spring 42 is fitted over an outer surface of the pole body 41 and restricted in the pole mounting seat 50 after the mounting. The spring can generate an elastic force in a direction opposite a pressing direction when the contact terminal 411 of the pole body 41 is pressed, such that the pole body is mounted on the pole mounting seat 50 in a floating manner, and the pole is in good electrical connection with an electrical contact terminal of the battery.

In the example, the pole body 41 is movably mounted on an assigned part, such as an electrical connector for charging the battery, and cannot escape from the mounting position due to a limiting member snapped into the annular groove 413. Meanwhile, the spring 42 always exerts the elastic force on the pole body 41 to maintain a current state under the cooperation between the limiting member and the pole mounting seat. When in contact with a charging jack of a battery to be charged, the pole body 41 can retract under stress, thereby achieving a good contact effect while reducing rigid impact.

In an example of the embodiment, the cable connecting terminal 412 of the pole body 41 can define a cable clamping groove 414 recessed along an axis of the pole body 41 in order to mount a charging cable easily. The charging cable can be inserted into the cable clamping groove 414 and connected to a corresponding pole body 41.

In an example of the embodiment, the limiting member snapped into the annular groove 413 can be a C-shaped snap ring 415 having an opening, and the snap ring 415 has an outer diameter larger than a diameter of the pole body 41 and an inner diameter equal to a diameter of the annular groove 413. When the snap ring 415 is snapped into a corresponding annular groove 413, the spring is constrained to the pole body in the snap ring 415, while the pole is mounted on the pole mounting seat in the limiting manner via the snap ring 415, such that the pole cannot escape from the pole mounting seat when it is pressed by a charging end of the battery.

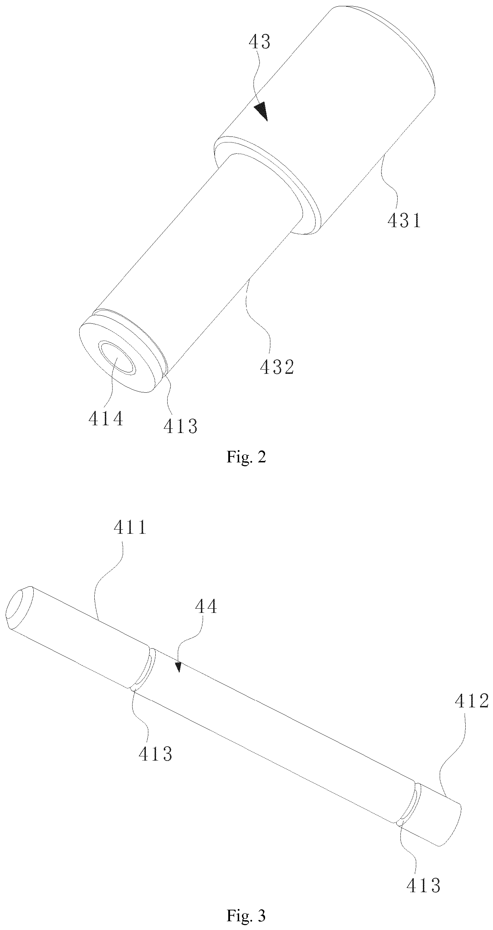

As shown in Figs. 2 and 3, in an example of the embodiment, the pole body 41 can include a high-voltage pole 43 and a low-voltage pole 44 which are mounted on a pole mounting plate through a high-voltage mounting hole and a low-voltage mounting hole respectively, and an electrical contact terminal of the high-voltage pole 43 has a diameter larger than an electrical contact terminal of the low-voltage pole 44.

In an example of the embodiment, in order to take full advantage of the structure of the high-voltage pole, a pole body diameter at the electrical contact terminal of the high-voltage pole 43 is larger than a pole body diameter at the cable connecting terminal thereof, that is the high-voltage pole can include a diameter-reducing segment 432 and a diameter-constant segment 432. When inserted into a mounting hole in the pole mounting seat, the diameter-reducing segment 432 has an end exposed outside, and the annular groove 413 is provided in the exposed end, that is, the annular groove is located in an end outer surface of the cable connecting terminal outside the high-voltage mounting hole. The snap ring is snapped in the groove, such that the high-voltage pole is prevented from escaping from the mounting seat. The spring 42 is fitted over the diameter-reducing segment 432 and is clamped by the diameter-constant segment 431 and the high-voltage mounting hole so to be restricted in a current position. The pressed spring exerts an elastic force pushing the high-voltage pole towards the electrical contact terminal, and the snap ring cooperates with this mounting position, such that the pole is clamped in the mounting seat, that is, the high-voltage pole 43 will be blocked by the snap ring 415 snapped into the annular groove 413 at the second end if it is going to come out of the mounting position under the elastic force of the spring 42. When the high-voltage pole 43 is under pressure in a vertical direction, the diameter-constant segment 432 can compress the spring 42 at the current mounting position, such that the high-voltage pole can move in a certain range.

As shown in Fig. 3, in an example of the embodiment, the low-voltage pole 44 can be a cylinder having a constant diameter, and two ends of the low-voltage pole are each provided with an annular groove. The annular grooves can be located in an end surface of the cable connecting terminal of the low-voltage pole outside the low-voltage mounting hole and be located in an end surface of the electrical contact terminal inside the low-voltage mounting hole. Similarly, the annular grooves are used to mount corresponding limiting members, such as the snap ring 415. The spring is fitted over the pole body between the two annular grooves. During mounting, the low-voltage pole can use two snap rings to be snapped at the same side of two ends of the low-voltage mounting hole in the pole mounting seat, while the spring is located in the low-voltage mounting hole to simultaneously exert elastic forces towards the two ends of the low-voltage pole on the two ends of the mounting hole. When subjected to a vertical pressure from one end of the mounting hole, the low-voltage pole can compress the spring to move towards the other end, such that a certain pressure can always be maintained between the low-voltage pole and a pressing member, thereby improving an electrical connection effect.

An electrical connector in another example of the embodiment can be a floating electrical connector, and include a baseplate 10 to provide a mounting base, a floating plate 20 floatingly connected to the baseplate 10 by means of an elastic member 30, and a pole mounting seat 50 fixed to the floating plate 20 by means of screws 15. The pole mounting seat 50 defines a mounting groove for mounting the elastic pole 40. The elastic pole 40 is mounted on the pole mounting seat 50 by means of the mounting groove. The baseplate 10 and the floating plate 20 define mounting openings through which the cable connecting terminal of the elastic pole 40 passes.

### Embodiment 2

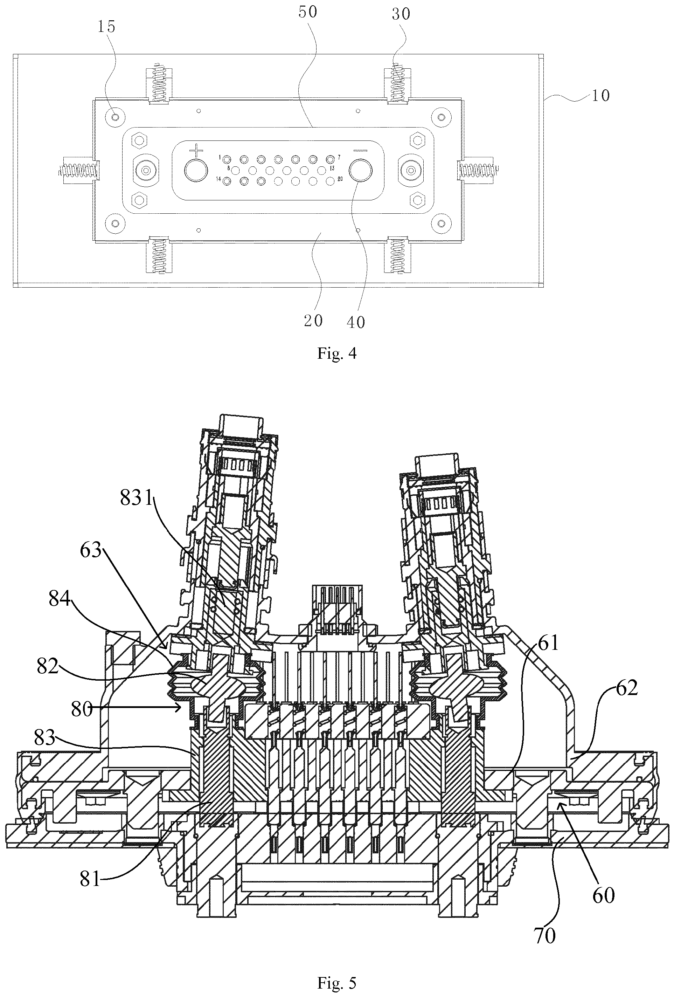

As shown in Fig. 5, an electrical connector of an embodiment according to the invention includes an electric-connector vehicle end 60 and an electrical connector battery end 70. The electric-connector vehicle end 60 includes a vehicle-end floating plate 61, a vehicle-end fixing plate 62, and a high-voltage assembly 63, the high-voltage assembly 63 has two ends connected to the vehicle-end floating plate 61 and the vehicle-end fixing plate 62 respectively. A floating electrical connection of the high-voltage assembly 63 is achieved by means of the vehicle-end floating plate 61 and the vehicle-end fixing plate 62, thereby ensuring stability of the electrical connector during connection and operation.

The high-voltage assembly 63 includes a pole component 80 and a high-voltage pin 631, the high-voltage pin 631 is connected to the vehicle-end fixing plate 62, the pole component 80 is connected to the vehicle-end floating plate 61, and the high-voltage pin 631 is electrically connected to the pole component 80. At least one conductive elastic body is arranged between the high-voltage pin 631 and the pole component 80, the conductive elastic body is used to keep electrical connection all along when the high-voltage pin 631 is floating relative to the pole component 80. The floating connection between the high-voltage pin 631 and the pole component 80 by means of the conductive elastic body, which improves stability of the electrical connection between the high-voltage pin 631 and the pole component 80.

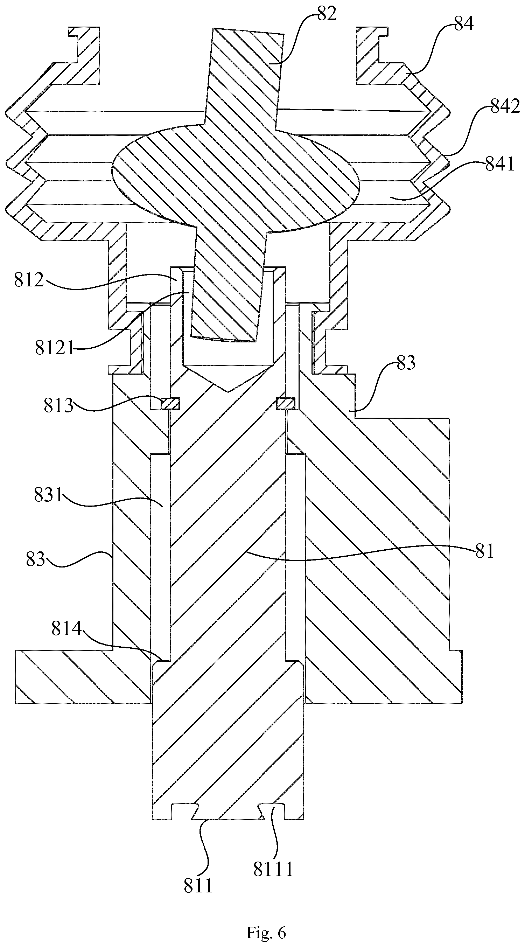

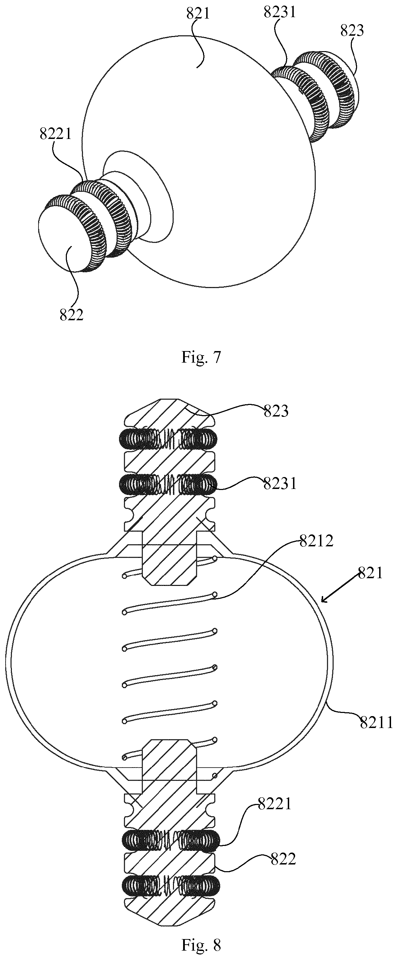

As shown in Fig. 5, Fig. 6 and Fig. 7, the pole component 80 includes a pole 81, a conductive joint 82, at least one conductive elastic member (not shown in the drawings). The pole 81 has two ends provided with a first electrical connecting portion 811 and a second electrical connecting portion 812 respectively. The first electrical connecting portion 811 is electrically connected to the conductive elastic member, the conductive elastic member can be electrically connected to the first electrical connecting portion 811 by crimping. The first electrical connecting portion 811 is electrically connected to an electric-connector battery end 70. The conductive elastic member is arranged between the first electrical connecting portion 811 and electrical connector battery end 70, achieving the floating connection between the pole 81 and electrical connector battery end 70, such that the electrical connection is more stable, especially for the electrical connection in the case of dynamic load and vibration environment, abnormal situations, such as failure on the electrical connection, overburning, etc., due to loose connection can be effectively prevented, and the reliability of the electrical connection is greatly enhanced and the service life is prolonged.

The conductive joint 82 includes a flexible member 821 and a first contact 822. The first contact 822 has a first end connected to the flexible member 821 and a second end electrically connected to the second electrical connecting portion 812. The flexible member 821 is electrically connected to the high-voltage pin 831, the flexible member 821 is arranged between the pole 81 and the high-voltage pin 831, achieving the floating connection between the pole 81 and the high-voltage pin 631, abnormal situations, such as failure on the electrical connection, overburning, etc., due to loose connection can be effectively prevented, and the stability of the electrical connection of the pole 81 in the electrical connector is improved.

For improvement on stability of the electrical connection of the pole 81, the pole component 80 can include a pole plate 83, the pole plate 83 has a receiving chamber 831. The receiving chamber 831 has two ends each provided with a guiding hole, the pole 81 runs through the receiving chamber 831 with two ends extending out of two guiding holes. With the two guiding holes, the pole 81 can only move back and forth in a direction defined by the two guiding holes, the pole 81 is effectively limited, offset and malposition of the pole 81 can be prevented, and the electrical connection of the pole 81 is improved.

The pole 81 has an end adjacent to the conductive joint 82, and the end has an outer wall provided with a limiting portion, the limiting portion has a first end connected to an outer surface of the pole 81 and a second end extending and protruding in a radial direction of the pole 81. That is, the limiting portion is protruding. The limiting portion can be a snap ring 813, the pole 81 defines an annular groove (not shown in the drawings) in an outer wall, and the snap ring 813 is snapped into the annular groove, such that the pole 81 can be mounted to and dismounted from the pole plate 83 with a simple structure.

The snap ring 813 is located outside the receiving chamber 831, and the snap ring 813 abuts an outer surface of the receiving chamber 831. With the snap ring 813, the pole 81 can be prevented from falling off the pole plate 83, and the pole 81 can be ensured to always run through the two guiding holes. Meanwhile, during movement of the pole 81, the snap ring 813 effectively prevents the pole 81 move towards the first electrical connecting portion 811, the pole 81 and the conductive joint 82 cannot be disengaged from each other, and the stability of the electrical connection between the pole 81 and the conductive joint 82 can be prevented.

The pole 81 has another end way from the conductive joint 82, and the another end has an outer wall provided with a protrusion 814, the protrusion 814 extends out in the radial direction of the pole 81, and the protrusion 814 runs through the guiding hole, that is the protrusion 814 is protruding. The pole component 80 can include an elastic body (not shown in the drawings), the elastic body is located in the receiving chamber 831 and between the snap ring 813 and the protrusion 814, and the elastic body has two ends abutting an inner wall of the receiving chamber 831 and the protrusion 814 respectively. With the elastic body, a force is exerted on the pole 81 in the direction along the first electrical connecting portion 811, and the first electrical connecting portion 811 can retract under stress upon contact with the electric-connector battery end 70, thereby reducing rigid impact on the first electrical connecting portion 811. The floating connection can be achieved during the electrical connection, desired contact between the first electrical connecting portion 811 and electrical connector battery end 70 is ensured, and the stability of the electrical connection between the first electrical connecting portion 811 and electrical connector battery end 70 is greatly improved.

The elastic body can be a reset spring, the pole 81 runs through the reset spring. The reset spring has high elasticity and good property, and is easy to restore after removing an external force. Meanwhile, the reset spring exerts a force on the pole 81, such that the pole 81 is under uniform force, and offset and malposition of the pole 81 can be effectively prevented.

In order to enhance the intensity of connection between the pole 81 and the conductive elastic member, the first electrical connecting portion 811 can be provided with at least one placing chamber 8111, the conductive elastic member has a contact portion and a pressing portion, and the conductive elastic member is mounted in the placing chamber 8111 by means of the pressing portion, thereby effectively preventing the conductive elastic member from disengaging. The contact portion is exposed out of an outer surface of the first electrical connecting portion 811 and can abut on the electrical connector battery end 70, achieving the floating connection of the pole 81 and more stable electrical connection. Preferably, the conductive elastic member can be a first conductive spring.

In order to improve safety of the pole component 80, the pole component 80 can include an insulating bush 84, the insulating bush 84 defines a cavity 841 therein, the conductive joint 82 is located in the cavity 841. The insulating bush 84 protects, insulates, and seals the conductive joint 82 well. The insulating bush 84 is connected to the pole plate 83, the insulating bush 84 and the pole plate 83 protect the pole 81 and the conductive joint 82, thereby improving safety and reliability of the electrical connector. Preferably, the insulating bush 84 is connected to the pole plate 83 by snapping, such that the insulating bush 84 can be mounted on and dismounted from the pole plate 83.

The insulating bush 84 can be provided with a wavy portion 842. With the wavy portion 842 on an outer surface of the insulating bush 84, the insulating bush 84 has good flexibility, deformability of the insulating bush 84 can be improved, and the insulating bush 84 can insulate and seal the conductive joint 82 in a better way.

As shown in Fig. 5, Fig. 6, Fig. 7 and Fig. 8, the conductive joint 82 further includes a second contact 823, the flexible member 821 has two ends connected to the first contact 822 and the second contact 823 respectively, the conductive joint 82 is electrically connected to the pole 81 by means of the first contact 822, and is electrically connected to the high-voltage pin 631 by means of the second contact 823. The conductive elastic body can be a third conductive spring 8231, the third conductive spring 8231 is pressed between the high-voltage pin 631 and the second contact 823, improving stability of electrical connection between the high-voltage pin 631 and the conductive joint 82. At least one second conductive spring 8221 can be pressed between the pole 81 and the first contact 822. With the second conductive spring 8221, floating connection between the pole 81 and the first contact 822 is achieved, and stability of the electrical connection between the pole 81 and the conductive joint 82 is improved.

In order to enhance stability of electrical connection between the pole 81 and the conductive joint 82 and electrical connection between the conductive joint 82 and the high-voltage pin 631, the second electrical connecting portion 812 can be provided with the first cavity portion 8121, the first contact 822 is inserted in the first cavity portion 8121, the first contact 822 defines at least one first annular spring groove in an outer wall, the second conductive spring 8221 is pressed in the first annular spring groove, and the second conductive spring 8221 is pressed between the first cavity portion 8121 and the first annular spring groove. The second conductive spring 8221 is effectively pressed and mounted between the pole 81 and the conductive joint 82, the electrical connection is more stable. Similarly, the high-voltage pin 631 can be connected to the conductive joint 82 by means of a socket, the socket has a second cavity portion at each of two ends thereof, and the high-voltage pin 631 and the second contact 823 are inserted in second cavity portions at the two ends of the socket respectively. The high-voltage pin 631 and the second contact 823 each define at least one second annular spring groove in outer walls thereof, the third conductive spring 8231 is pressed in the second annular spring groove, and the third conductive spring 8231 is pressed between the second cavity portion and the second annular spring groove. Intensity of connection and arrangement of the third conductive spring 8231 is effectively enhanced, and the electrical connection is more stable.

The flexible member 821 includes a cavity body 8211, the cavity body 8211 has two ends connected to the first contact 822 and the second contact 823 respectively. The cavity body 8211 is made of flexible material. When the conductive joint 82 is employed, the cavity body 8211 can be stretch and compressed, or twisted in the radial direction, to adapt relative displacement of connection between the conductive joint 82 and the pole 81, and relative displacement of connection between the conductive joint 82 and the high-voltage pin 631 in the axial direction and radial direction, performance of the electrical connection of the conductive joint 82 can be prevented from getting worse due to changes of relative displacement, stability of electrical connection of the high-voltage assembly 63 is greatly improved. Preferably, the cavity body 8211 is crimped or welded to the first contact 822 and the second contact 823, thereby enhancing intensity of structural connection of the conductive joint 82, and ensuring stability of the electrical connection of the conductive joint 82.

The cavity body 8211 can be a spherical-like elastic cavity body enclosed by a plurality of flexible conductive bars, the cavity body 8211 also can be a spherical-like elastic cavity body enclosed by a grid flexible conductive member. The cavity body 8211 also can be a spherical-like elastic cavity body woven from metal wires or formed by stretching a metal conductive tape.

The flexible member 821 further includes a spring 8212, the spring 8212 is located in the cavity body 8211 and is located between the first contact 822 and the second contact 823. The spring 8212 has two ends connected to the first contact 822 and the second contact 823 respectively by welding and crimping. With the spring 8212, structural strength of the conductive joint 82 is effectively enhanced, such that electrical connection of the conductive joint 82 can be ensured even relative displacement of two ends the flexible member 821 changes. Meanwhile, the spring 8212 is conductive, which further improves stability of the electrical connection between the first contact 822 and the second contact 823.

### Embodiment 3

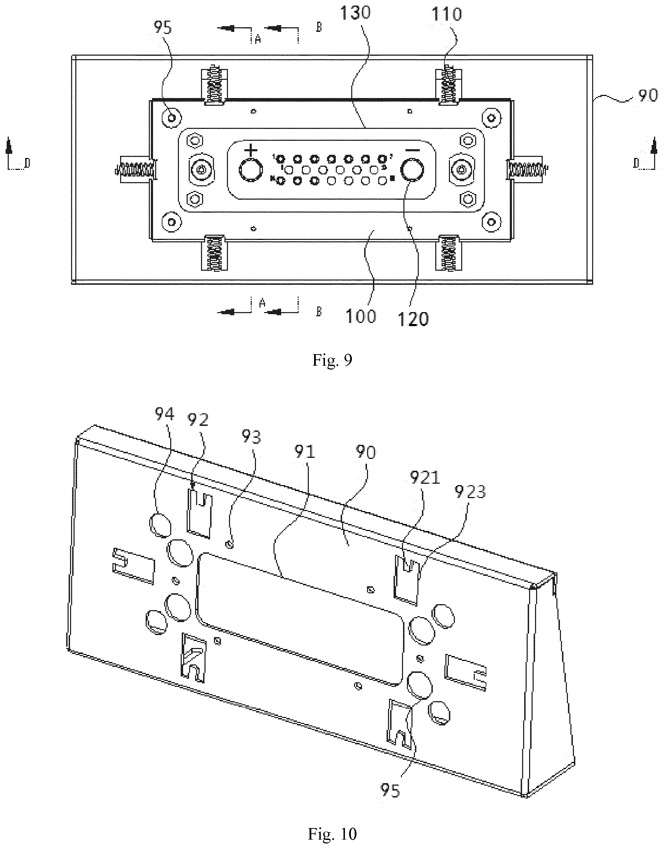

As shown in Fig. 9 and Fig. 10, an embodiment which does not fall within the subject-matter of the claimed invention is used to charge a replaced battery for an electric vehicle. An electrical connector in the embodiment generally includes a baseplate 90 and a floating plate 100. The baseplate 90 includes a hollow baseplate mounting opening 91. The floating plate 100 is movably mounted on a surface of the baseplate 90 by means of an elastic member 110. The floating plate 100 is provided with an elastic pole 120 for electrical connection.

When the electrical connector is used to charge a battery to be charged, the elastic pole 120 is inserted into a charging interface of the battery to be charged, the elastic pole 120 can have certain elasticity for stretching out and drawing back after being in contact with the battery to be charged, which enhances a contact effect at a contact point. In addition, the floating plate 100 translates relative to the baseplate 90 to some extent under the control of the elastic member 110 when the floating plate 100 is affected by an external force, thereby improving connection of the elastic pole and preventing rigid damage.

Elastic members 110 can be symmetrically arranged around the mounting opening 91 of the baseplate 90, such that the floating plate 100 is under a uniform force. In the example, the elastic pole 120 used to bear a pressure perpendicular to the baseplate 90, while the elastic members 110 can enable the elastic pole 120 to bear a pressure parallel to the baseplate 90, such that the elastic pole is in elastic connection in both a vertical and horizontal direction, enlarging an adaptive range of the electrical connector.

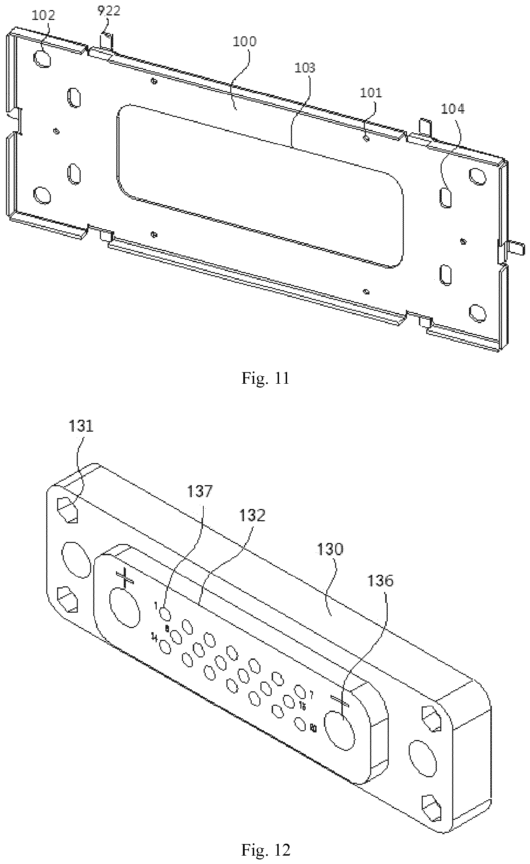

As shown in Fig. 11, in an example of the embodiment, the elastic members 110 can be mounted as follows.

An edge of the baseplate 90 and an edge of the floating plate 100 are provided with a holder 92 for mounting the elastic member 110, the holder 92 includes a first fixing block 921 on the baseplate 90 around the mounting opening 91 and a second fixing block 922 on the floating plate 100, and the first fixing block 921 corresponds to the second fixing block in position. The elastic member 110 has two ends connected to the first fixing block 921 and the second fixing block 922 respectively and held by them. The whole floating plate 100 is held on the baseplate 90 by the elastic members 110 which are symmetrically arranged.

Specifically, the first fixing block 921 and the second fixing block 922 can be formed by portions of the baseplate 90 and the floating plate 100, and the first fixing block 921 is spaced apart from the second fixing block 922 at a certain distance to receive the elastic member 110. The elastic member 110 in the embodiment can be a spring or an elastic steel roll. In a case that the spring is adopted, the spring can have two ends connected to the first fixing block 921 and the second fixing block 922. The first fixing block 921 and the second fixing block 922 have dimensions smaller than an inner diameter of the spring, such that the spring is fitted over the first and second fixing block. In addition, one of the first fixing block 921 and the second fixing block 922 can be bent based on a position of the other, such that the first fixing block 921 and the second fixing block 922 correspond to each other in position and are in the same plane. For easy mounting the elastic member 110, the baseplate 90 and the floating plate 100 provided with the first fixing block 921 and the second fixing block 922 can also be provided with corresponding grooves 923.

**In** an example of the embodiment, in order to make the floating plate 100 easily float relative the baseplate 90, the floating plate 100 can be provided with a plurality of bumps on a side facing the baseplate 90, such that the floating plate 100 can be spaced apart from the baseplate 90 at a certain distance.

Furthermore, in an example of the embodiment, the floating plate 100 and the baseplate 90 can define first fixing holes 94, 102 respectively, a guiding member 95 is mounted in the first fixing holes 94, 102 to limit them together, the guiding member 95 includes a guiding sleeve and a guiding screw, the guiding sleeve 95 is mounted on the baseplate 90, the guiding screw runs through the floating plate 100 to be threadedly connected to the guiding sleeve 95, the guiding sleeve 95 located at the baseplate 90 has a portion in the first fixing hole 102, and the portion has a diameter less than that of the first fixing hole 102. The guiding sleeve 95 has another end outside the first fixing hole, and the another end has a diameter than that of the first fixing hole 102, The guiding screw is connected and fixed to the portion in the first fixing hole of the guiding sleeve 95 via an external thread or an internal thread.

The guiding member 95 is used to connect the floating plate 100 with the baseplate 90, and the floating plate 100 can only slide relative to the baseplate 90 after being connected, that is, the floating plate can only move within a range of diameters of the first fixing holes 94, 102. **In** addition, a plurality of first fixing holes 94, 102 can be provided and arranged symmetrically around the floating plate 100. In addition, in other embodiment, the guiding member 95 may be a rivet.

As shown in Figs. 11 and 12, in an example of the embodiment, the floating plate 100 can define a hollow floating-plate mounting opening 103 in a middle portion, a pole mounting plate 130 specially for mounting the elastic pole 120 is fixed to the mounting opening 103. With the independent pole mounting plate 130, the elastic pole 120 can be easily mounted, and the whole electrical connector can be easily dismounted and maintained. A fixed connection can be provided between the pole mounting plate 130 and the floating plate 100. For instance, the floating plate 100 and the pole mounting plate 130 define second fixing holes 104, 131 respectively through which a fixing member runs, the baseplate 90 defines a receiving hole 95 at a position corresponding to the second fixing holes 104, 131 for receiving the fixing member. The fixing member herein can be a structure with a screw and a nut. The second fixing holes 104, 131 can be arranged at four corners of the pole mounting plate 130. In addition, to avoid that the fixing member affects sliding of the floating plate 100 relative to the baseplate 90, the fixing member has a movement range relative to the receiving hole at least equal to those of the first fixing holes 94, 102.

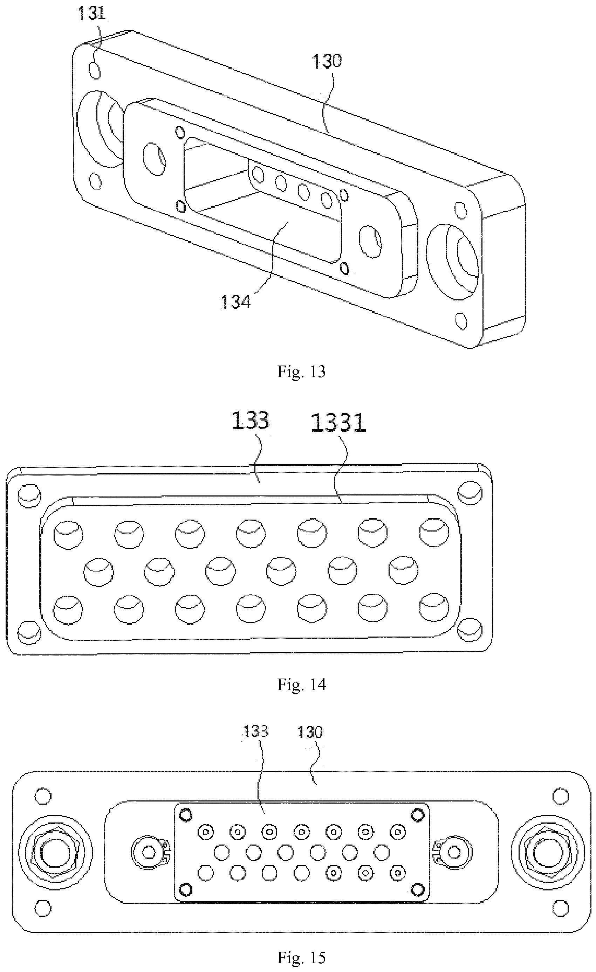

As shown in Figs. 12, 13, 14, 15, furthermore, in an example of the embodiment, distance protruding towards the elastic pole 120, the pole mounting plate 130 defines a groove retracting towards the boss 132 at another side running through the floating plate, a closing plate 133 is mounted on a surface of the groove, the closing plate 133 and the boss 132 define an accommodating space 134 for accommodating the elastic pole 120.

In the embodiment, the boss 132 can be directly formed on the pole mounting plate 130 by stamping, while the closing plate 133 can be provided with a snapping boss 1331 at a side opposite the boss 132, and the snapping boss 1331 is of a shape the same as that of the accommodating space 134, the closing plate 133 is connected to the pole mounting plate 130 by snapping after that the snapping boss 1331 is inserted in the accommodating space 134. The boss 132 is more suitable for connection between the elastic pole 120 and a charging jack of the battery to be charged.

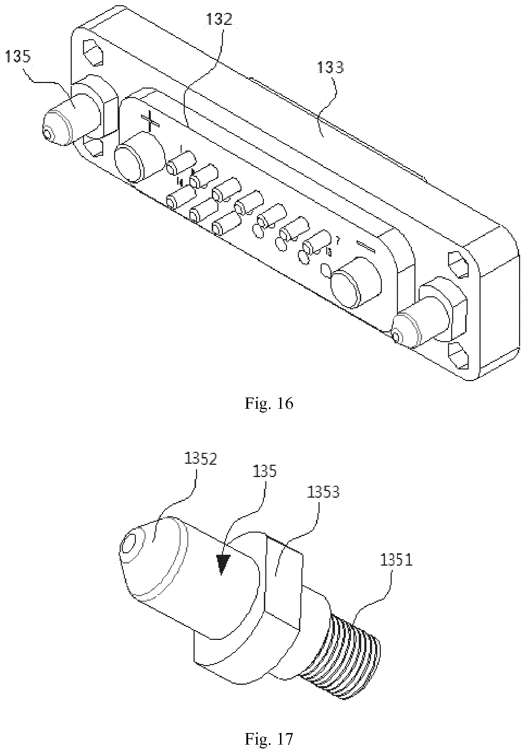

As shown in Fig. 16, in an example of the embodiment, in order to facilitate insertion of the elastic pole 120 into the battery to be charged, the pole mounting plate 130 can be provided with a positioning column 135 for limiting a contact position between the elastic pole 120 and the charging jack of the battery to be charged, two positioning columns 135 can be mounted at two sides of the boss 132, and the positioning columns 135 has a height larger than that of the elastic pole 120. When the electrical connector is in contact with the battery to be charged, the positioning columns 135 are firstly inserted in corresponding fixing holes on the battery to be charged, and then the elastic pole 120 is inserted in the charging jack of the battery to be charged. The positioning columns 135 can also protect the inserted elastic pole from being influenced by a horizontal force.

As shown in Fig. 17, in an example of the embodiment, the positioning columns 135 has a first end (such as a threaded end 1331 having an external thread) by which the positioning columns 135 can be fixedly connected to the pole mounting plate 130, and a second end configured as a taper end 1352 for easy insertion, a baffle 1353 projecting from a pole body can be provided between two ends, and the baffle 1353 can limit a length by which the positioning columns 135 is screwed in.

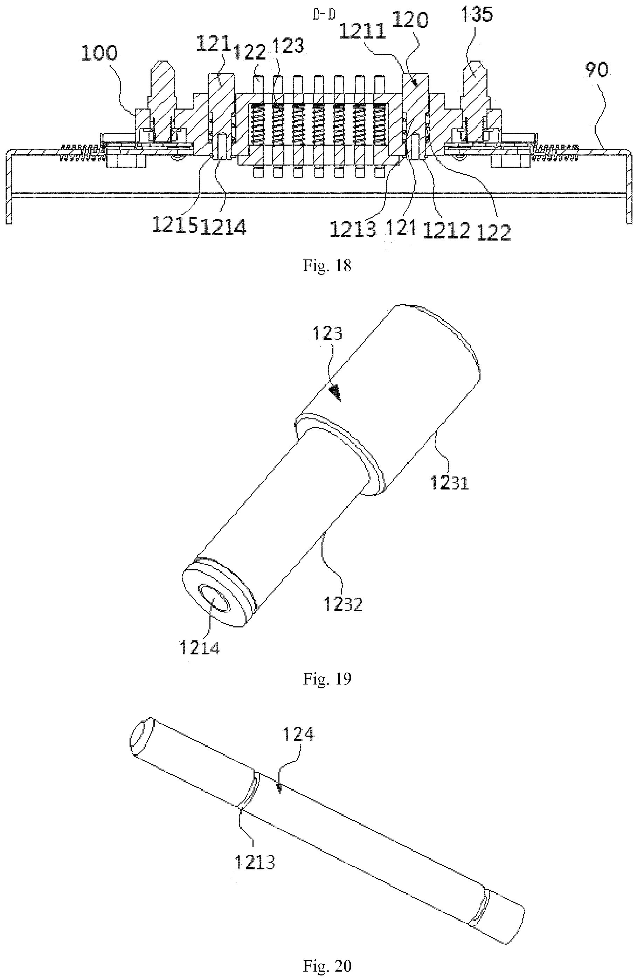

As shown in Fig. 18, in an example of the embodiment, the elastic pole 120 can include the pole body 121 and the spring 122, the elastic pole 120 is mounted on the pole mounting plate, and the pole mounting plate defines a mounting hole through which the elastic pole 120 passes.

The pole body 121 has a first end, an electrical contact terminal 1211, in contact with the battery, and a second end, a cable connecting terminal 1212, for connection with a supply line. The pole body 121 defines an annular groove 1213 in an outer surface. The electrical contact terminal 1211 can be flat for increasing a contact area. The annular groove 1213 can be used to mount a limiting member, such that the elastic pole 120 is mounted on the pole mounting plate in limiting manner. The limiting member is a snap ring, the snap ring has an outer diameter larger than that of the pole body at a portion inserted into the annular grooves1213, such that the spring is limited on the pole body, and the spring cooperates with the snap ring to floatingly mount the pole body on the pole mounting seat.

The spring 122 is fitted over an outer surface of the pole body 121 and limited in a mounting hole of the pole mounting plate after mounting. The spring generates an elastic force in a direction opposite a pressing direction when the contact terminal 1211 of the pole body 121 is pressed, In the example, the pole body 121 is movably mounted on the pole mounting plate and cannot leave a mounting position under limit by the limiting member snapped into the annular groove 1213, Meanwhile, the spring 122 always exerts an elastic force on the pole body 121 for maintaining a current state with cooperation with the pole mounting seat. When in contact with a charging jack of the battery to be charged, the pole body 121 can retract under stress, thereby achieving good contact effect with reduction in rigid impact.

In an example of the embodiment, the cable connecting terminal 1212 can define a cable clamping groove 1214 extending in an axis of the pole body 121 for easily mounting a charging cable. The charging cable can be inserted into the cable clamping groove 1214 and connected to a corresponding pole body 121.

In an example of the embodiment, the limiting member snapped into the annular groove 1213 can be a C-shaped snap ring 1215 having an opening, the snap ring 1215 has an outer diameter larger than a diameter of the pole body 121 and an inner diameter equal to that of the annular groove 1213. When the snap ring 1215 is snapped into a corresponding annular groove 1213, the end of the pole body 121 on which the snap ring 1215 is mounted cannot escape from another end of the mounting hole.

As shown in Figs. 19, 20, in an example of the embodiment, a high-voltage pole 123 and a low-voltage pole 124 are mounted on the boss 132. A plurality of low-voltage poles 124 are provided, and two high-voltage poles are arranged at two sides of the low-voltage pole.

**In** an example of the embodiment, the boss 132 can define a high-voltage mounting hole 56 with a step, the high-voltage pole 123 is of a shape corresponding to that of the high-voltage mounting hole 56 and the high-voltage pole 123 can be inserted into the high-voltage mounting hole 56, the inserted high-voltage pole 123 is limited in the high-voltage mounting hole 56 by the spring 122 and the snap ring 1215 locked in the annular grooves 1213.

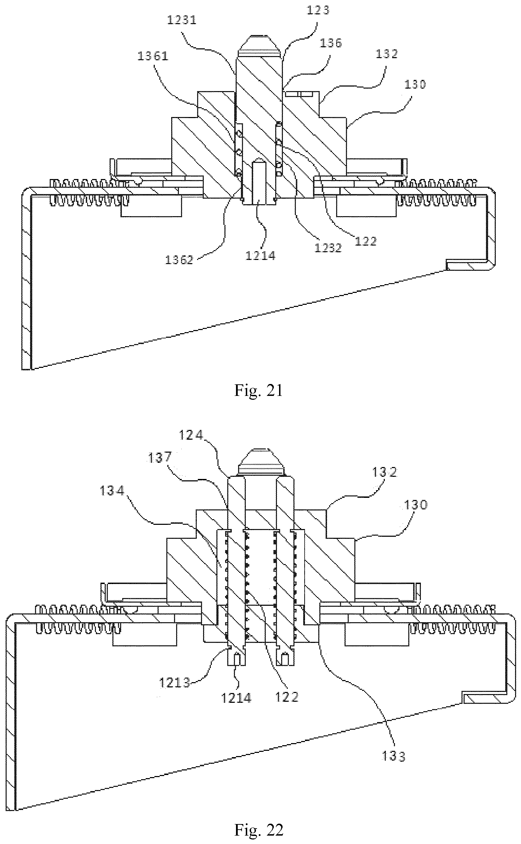

As shown in Fig. 21, a specific mounting structure can be as follows, the high-voltage mounting hole 136 includes a first mounting segment 1361 and a second mounting segment 1362, and the second mounting segment 1362 has a diameter smaller than that of the first mounting segment 1361, a diameter of the pole body with the electrical contact terminal of the high-voltage pole 123 is larger than that of the pole body with the cable connecting terminal. The pole body at the cable connecting terminal is a diameter-reducing segment 1232, and the pole body at the electrical contact terminal is a diameter-constant segment 1231. After the high-voltage pole 123 is inserted in the high-voltage mounting hole 136, the diameter-constant segment 1231 corresponds to the first mounting segment 1361, the diameter-reducing segment 1232 corresponds to the second mounting segment 1362, and the diameter-reducing segment 1232 has its end exposed outside after being inserted in the second mounting segment 1362. The annular groove 1213 is arranged at the exposed end of the cable connecting terminal, and the spring 122 is fitted over the diameter-reducing segment 1232 located in the high-voltage mounting hole and limited in the first mounting segment 1361 by the second mounting segment 1362 and the diameter-constant segment 1231 in a compressed state. The high-voltage pole 123 moves to the outside of the high-voltage mounting hole 136 under elasticity of the spring 122, but is stopped by the snap ring 1215 locked in the annular groove 1213. When the high-voltage pole 123 is under a pressure in a vertical direction, the diameter-constant segment 1232 thereof moves in the first mounting segment 1361 to press the spring 122.

As shown in Fig. 22, in an example of the embodiment, the boss 132 of the pole mounting plate 130 and the closing plate 133 define a low-voltage mounting hole 137 with a constant diameter at corresponding positions, the electrical contact terminal and the cable connecting terminal of the low-voltage pole 124 run through the boss 132 and the closing plate 133 respectively, the spring 122 is mounted on the pole body of the low-voltage pole 124 located in the low-voltage mounting hole 137, the low-voltage pole 124 defines two annular grooves 1213 at an end of the low-voltage pole 124 running through the closing plate 133 and the pole body located in the low-voltage mounting hole 137.

In the embodiment, the low-voltage pole 124 is a cylinder having a constant diameter. The low-voltage mounting hole 137 has a constant diameter at the boss 132 and the closing plate 133. When the low-voltage pole 124 is inserted into the low-voltage mounting hole 137 at the boss 132 and the closing plate 133, the corresponding snap ring 1215 is snapped in the annular grooves 1213 exposed from an end of the closing plate 133 to prevent the low-voltage pole 124 from escaping in a direction of the boss 132, while after another snap ring 1215 is snapped into the annular grooves 1213 located in the mounting hole 137, the spring located between the closing plate 133 and the snap ring 1215 can be clamped, the spring 122 can enable the low-voltage pole 124 to bear a certain vertical pressure and keep the low-voltage pole 124 expose from the boss 132 by means of a pressure from the closing plate 133.

In an example of the embodiment, two high-voltage poles 123 can be provided and arranged at two ends of the boss 132, and a plurality of low-voltage poles 124 can be provided and arranged between the two high-voltage poles 123. For instance, in the embodiment, an upper row of seven low-voltage poles 124, a middle row of six low-voltage poles 124, and a lower row of seven low-voltage poles 124, are provided.

### Embodiment 4

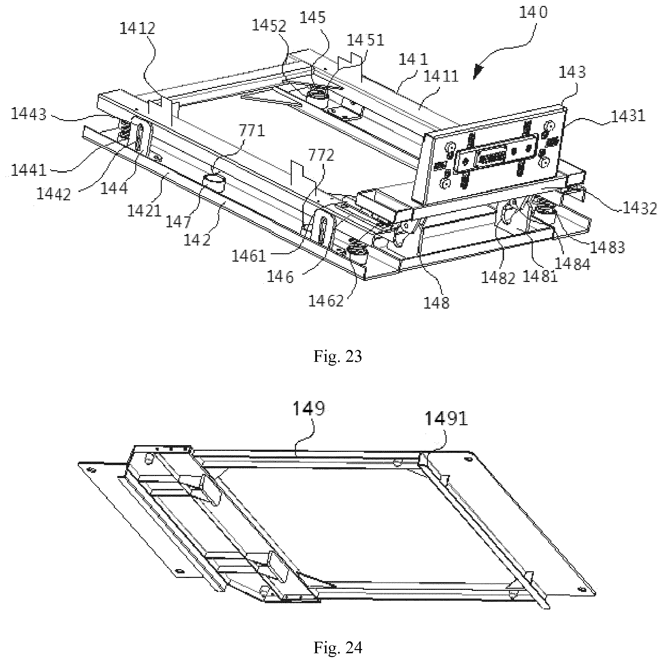

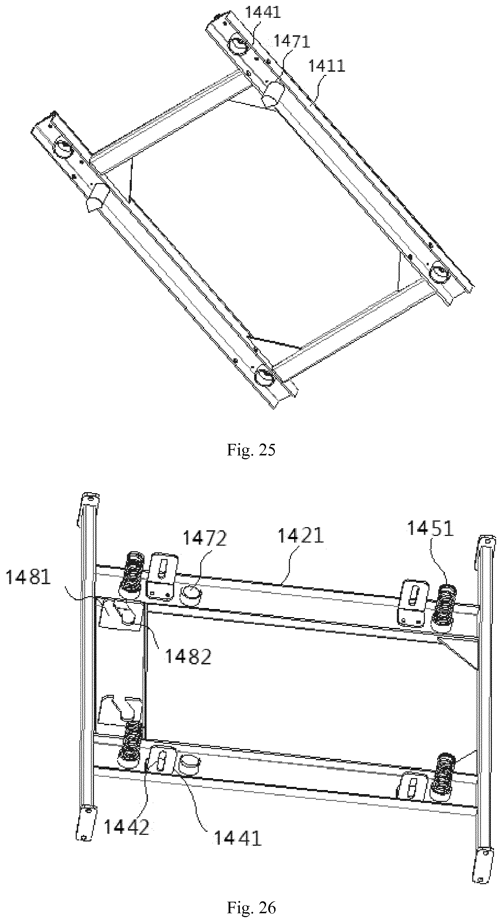

As shown in Figs. 23, 25 and 26, a battery charging board 140 for an electric vehicle provided by an embodiment which does not fall within the subject-matter of the claimed invention and generally includes an upper frame assembly 141, a lower frame assembly 142 and a floating charging plate 143.

The upper frame assembly 141 is used to place a battery to be charged and includes an upper frame 1411 supporting the battery. The lower frame assembly 142 is used to elastically support the upper frame 1411, the lower frame assembly 142 includes a lower frame 1421 and an elastic device 145 arranged on an upper surface of the lower frame 1421. With the elastic device 145, the upper frame 141 can move downwards at a specified distance under the action of a gravity of the battery after the battery is in position. The floating charging plate 143 is used to charge the battery and mounted on an end at an upper surface of the upper frame 1411, the floating charging plate 143 includes a mounting seat 1432 which is movably connected to the upper frame 1411 and the lower frame 1421, and a floating electrical connector 1431 which is mounted on the mounting seat 1432 to be in contact with the battery through insertion. The mounting seat 1432 can move along with the upper frame 1411 when the upper frame 1411 moves downwards, such that the floating electrical connector 1431 is automatically connected to the battery in position through downward movement.

In the embodiment, with the interconnected upper frame assembly, lower frame assembly and floating charging plate, the battery can automatically move to charge after placement, insertion connection between the floating charging plate and the battery to be charged can be achieved automatically by means of cooperation among the interacting three during movement, such that the battery to be charged can be charged automatically. With the embodiment, the battery for an electric vehicle can be automatically charged completely without manual work, automatic processing during the whole charging period can be improved, and the charging efficiency can be increased.

In an example of the embodiment, a specific elastic device 145 can be a hydraulic, pneumatic, or an electric control device, which enables the upper frame 1411 to move to a designated location after the battery is placed. In another embodiment of the present disclosure, the elastic device 145 can further be a compression spring 1451, the battery can be moved downwards to the designated location by choosing relation between an elasticity of the spring 1451 and a weight of the battery.

Furthermore, in an example of the embodiment, in the case that the elastic device 145 is the spring, each of a lower surface of the upper frame 1411 and an upper surface of the lower frame 1421 can be provided with a fixing cartridge 1452 for mounting and limiting the spring 1451, the compression spring 1451 has two ends mounted in two fixing cartridges 1452 respectively. The fixing cartridges 1452 can prevent the upper frame 1411 from being disengaged from connection with the spring 1451.

As shown in Fig. 24, in an example of the embodiment, for easy placement of the battery, a supporting plate 149 can be mounted above the upper frame assembly 141 for limiting movement of the battery. The supporting plate 149 is movably placed on an upper surface of the upper frame 1411, and the supporting plate 149 can define a through hole. A specific placement can be as follows, the supporting plate 149 is provided with two parallel L-shaped right-angle mounting bars 1491 at a lower surface, the upper frame assembly 141 is provided with a step snapping plate 1412 at an upper surface, each of the right-angle mounting bars 1491 is fixed to a lower surface of the supporting plate 149 by means of one right-angle side with the other right-angle side parallel to the supporting plate 149, and directions of the two right-angle mounting bars 1491 are opposite.

The snapping plate 1412 has a stage of a height equal to that of the right-angle mounting bars 1491. After placement, the supporting plate 149 is locked on the snapping plate 1412 by means of the right-angle mounting bars 1491, each of the two right-angle mounting bars 1491 is put on the corresponding stage of the snapping plate 1412 by means of one right-angle side, the supporting plate 149 can be prevented from lateral movement, a direction of the limited movement corresponds to that of movement of the floating charging plate 143, a fault of connection between the battery and the floating electrical connector 1431 can be prevented during downwards movement of the battery.

In an example of the embodiment, in order to prevent the battery from moving during charging, a limiting device 147 can be provided between the upper frame 1411 and the lower frame 1421 for limiting movement of the upper frame 1411 relative to the lower frame after placement of the battery.

In an example of the embodiment, the limiting device 147 can include a taper positioning rod 1471 arranged on a lower surface of the upper frame 1411 and a taper positioning base 1472 arranged on an upper surface of the lower frame 1421 and corresponding to the taper positioning rod 1471 in position. When the battery presses the upper frame 1411 down, the taper positioning rod 1471 at a bottom of the upper frame 1411 can be inserted into the taper positioning base 1472 at a top of the lower frame 1421, thereby preventing the upper frame 1411 from moving during charging. A plurality of taper positioning rods 1471 can be arranged on the lower surface of the upper frame, and a plurality of taper positioning bases 1472 can be arranged on the upper surface of the lower frame.

In an example of the embodiment, in order to prevent the upper frame 1411 from getting out of control under the elastic device 145 and to limit a moving direction of the upper frame 1411, the lower frame assembly 142 can be provided with a limiting device 144 for limiting a downward moving track of the upper frame assembly 141, and the limiting device 144 can also limit a range of up-down movement of the upper frame 1411. The limiting device 144 includes a limiting plate 1441 mounted on the lower frame 1421 and having a longitudinal sliding groove 1442, and a limiting rod 1443 arranged on the upper frame 1411 and inserted in the longitudinal sliding groove 1442.

The limiting plate 1441 surrounds the lower frame 1421, the longitudinal sliding groove 1442 in the limiting plate is perpendicular to the lower frame 1421, the limiting rod 1443 of the upper frame 1411 is arranged at a position corresponding to the limiting plate 1441 and inserted into the longitudinal sliding groove 1442. When no battery is placed on the upper frame 1411, the upper frame 1411 is jacked up by the elastic device 145, the limiting rod 1443 is located at a top end of the longitudinal sliding groove 1442. When the battery is placed on the upper frame 1411, the upper frame 1411 can only move along the longitudinal sliding groove 1442 because the longitudinal sliding groove 1442 limits the limiting rod 1443, such that the moving direction of the upper frame 1411 is limited, a plurality of limiting plates can be arranged at an edge of the upper frame to improve a limiting effect. In addition, the limiting effect of the limiting device 147 and the connection effect of the floating charging plate 143 can be improved by means of the embodiment.

In an example of the embodiment, in order to enable the mounting seat 1432 to act synchronously with the upper frame 1411 and reach a designated position, the mounting seat 1432 can be connected to the upper frame 1411 by means of a slide rail device 146 and connected to the lower frame 1421 by means of an orienting device 148. The slide rail device 146 is used to limit movement, towards the battery along the upper frame, of the mounting seat 1432 when the mounting seat 1432 is pressed down by the upper frame 1411, the movement can allow the floating electrical connector 1431 on the mounting seat 1432 to automatically make electrical contact with the lowered battery. A positioning device 148 is used to guide the floating charging plate to move along with the battery and corresponding to an electrical connection mechanism on a surface of the battery.

In an example of the embodiment, a specific slide rail device 146 is provided. The slide rail device 146 can include a sliding block 1462 mounted on a lower surface of the mounting seat 1432 and having a snapping groove and a slide rail 1461 mounted on an end of the upper frame 1411. The snapping groove of sliding block 1462 is snapped into the slide rail 1461, such that the mounting seat 1432 is slidingly connected to the upper frame 1411, when the upper frame 1411 is lowered, the slide rail 1461 exerts a force pulling the sliding block 1462 downwards, such that the mounting seat 1432 moves along the slide rail 1461 under limit of the orienting device 148. When the mounting seat 1432 moves to another end of the slide rail 1461, the floating electrical connector 1431 is connected to the battery on the upper frame 1411 via insertion.

An example of the embodiment provide an orienting device 148, the orienting device 148 includes a pulley base 1483 arranged on a lower surface of the mounting seat 1432 and having a pulley 1484, and an orientation limiting base 1481 mounted on an upper surface of the lower frame 1421 and having an oblique groove 1482, the oblique groove 1482 inclines in a direction the same as that of the slide rail 1461. The pulley base 1483 can be two parallel plates, while the pulley 1484 is perpendicularly connected between the two plates. When the mounting seat 1432 synchronously moves along with the upper frame 1411 and is lowered, the pulley 1484 moves along the oblique groove 1482 of the orientation limiting base 1481, an angle of inclination of the oblique groove 1482 is the same as a sliding and downwards movement track of the mounting seat 1432, and the movement of the mounting seat 1432 can be made not to diverge an insertion track with the battery.

Although the specific embodiments of the present disclosure are described as mentioned above, it should be understood by those skilled that the embodiment are explanatory and the scope the present disclosure is limited by the appended claims.

## Claims

1. A pole component (80) for a high-voltage assembly for charging electric vehicles, comprising: a pole (81), a conductive joint (82), and at least one conductive elastic member for achieving a floating connection between the pole (81) and an electrical connector battery end (70),
wherein the pole (81) has two ends provided with a first electrical connecting portion (811) and a second electrical connecting portion (812) respectively, the first electrical connecting portion (811) is electrically connected to the conductive elastic member,
the conductive joint (82) comprises a flexible member (821) and a first contact (822), and the first contact (822) has a first end connected to the flexible member (821) and a second end electrically connected to the second electrical connecting portion (812);
the conductive joint (82) further comprises a second contact (823) for connecting a high-voltage pin (631), and the flexible member (821) has two ends connected to the first contact (822) and the second contact (823) respectively;
**characterized in that** the flexible member (821) comprises a cavity body (8211) made of a flexible conductive material and having two ends connected to the first contact (822) and the second contact (823) respectively, and
the flexible member (821) further comprises a conductive spring (8212) located in the cavity body (8211) and connected to the first contact (822) and the second contact (823).

2. The pole component (80) according to claim 1, **characterized in that** the pole component (80) comprises a pole plate (83) having a receiving chamber (831), each of two ends of the receiving chamber (831) defines a guiding hole, the pole (81) runs through the receiving chamber (831), and two ends of the pole (81) are exposed out of two guiding holes.

3. The pole component (80) according to claim 2, **characterized in that** the pole component comprises an insulating bush (84), the insulating bush (84) is connected to the pole plate (83) and defines a cavity (841) therein, and the conductive joint (82) is located in the cavity (841).

4. The pole component (80) according to claim 3, **characterized in that** the insulating bush (84) is provided with a wavy portion (842), and/or the insulating bush (84) is connected to the pole plate (83) by snapping.

5. The pole component (80) according to claim 1, **characterized in that** the cavity body (8211) is crimped or welded to the first contact (822) and the second contact (823).

6. The pole component (80) according to claim 1, **characterized in that** the pole (81) has an end adjacent to the conductive joint (82), and the end has an outer wall provided with a limiting portion, the limiting portion has a first end connected to an outer surface of the pole (81) and a second end extending and protruding in a radial direction of the pole (81), and the limiting portion is located outside the receiving chamber (831) and abuts an outer surface of the receiving chamber (831).

7. The pole component (80) according to claim 6, **characterized in that** the pole (81) has an outer wall provided with an annular groove, and the limiting portion is a snap ring (813) embedded in the annular groove.

8. The pole component (80) according to claim 7, **characterized in that** the pole (81) has the outer wall provided with a protrusion (814), the protrusion (814) extends and protrudes outwardly in the radial direction of the pole (81), the protrusion (814) runs through the guiding hole, the pole component (80) comprises an elastic body, the elastic body is located in the receiving chamber (831) and located between the limiting portion and the protrusion (814), and the elastic body has two ends abutting an inner wall of the receiving chamber (831) and the protrusion (814) respectively.

9. The pole component (80) according to any one of claims 1 to 8, **characterized in that** the first electrical connecting portion (811) is provided with at least one placing chamber (8111), the conductive elastic member has a contact portion and a pressing portion, the pressing portion is mounted in the placing chamber (8111), and the contact portion is exposed out of an outer surface of the first electrical connecting portion (811);
preferably, the conductive elastic member is a first conductive spring;
more preferably, at least one second conductive spring (8221) is provided and pressed between the pole (81) and the first contact (822), the second electrical connecting portion (812) is provided with a first cavity portion, the first contact (822) has an outer wall provided with at least one first annular spring groove, and the second conductive spring (8221) is provided and pressed between the first cavity portion and the first annular spring groove.

10. A high-voltage assembly (63), **characterized in that** the high-voltage assembly (63) comprises the pole component (80) according to any one of claims 1 to 9, wherein a high-voltage pin (631) is electrically connected to the conductive joint (82), at least one conductive elastic body is provided and pressed between the high-voltage pin (631) and the conductive joint (82), and the conductive elastic body is used to maintain electrical connection between the high-voltage pin (631) and the conductive joint (82) in case of floating between the high-voltage pin (631) and the conductive joint (82).

11. The high-voltage assembly (63) according to claim 10, **characterized in that** the high-voltage pin (631) is connected to the conductive joint (82) by means of a socket, two ends of the socket are each provided with a second cavity portion, an outer wall of the high-voltage pin (631) and an outer wall of the conductive joint (82) each define at least one second annular spring groove, and the conductive elastic body is pressed between the second cavity portion and the second annular spring groove;
and/or the conductive elastic body is a third conductive spring (8231).

12. An electrical connector, **characterized in that** the electrical connector comprises the high-voltage assembly (63) according to any one of claims 10 to 11.

## Patentansprüche

1. Eine Polkomponente (80) für eine Hochspannungsanordnung zum Laden von Elektrofahrzeugen, umfassend:
einen Pol (81), eine leitende Verbindung (82) und mindestens ein leitendes elastisches Element zur Herstellung einer schwimmenden Verbindung zwischen dem Pol (81) und einem elektrischen Verbinderbatterieende (70),
wobei der Pol (81) zwei Enden hat, die mit einem ersten elektrischen Verbindungsabschnitt (811) bzw. einem zweiten elektrischen Verbindungsabschnitt (812) versehen sind, wobei der erste elektrische Verbindungsabschnitt (811) elektrisch mit dem leitenden elastischen Element verbunden ist,
die leitende Verbindung (82) ein flexibles Element (821) und einen ersten Kontakt (822) umfasst, und der erste Kontakt (822) ein erstes Ende hat, das mit dem flexiblen Element (821) verbunden ist, und ein zweites Ende, das elektrisch mit dem zweiten elektrischen Verbindungsabschnitt (812) verbunden ist;
die leitende Verbindung (82) ferner einen zweiten Kontakt (823) zum Anschließen eines Hochspannungsstifts (631) umfasst und das flexible Element (821) zwei Enden aufweist, die mit dem ersten Kontakt (822) bzw. dem zweiten Kontakt (823) verbunden sind;
**dadurch gekennzeichnet, dass** das biegsame Element (821) einen Hohlkörper (8211) umfasst, der aus einem biegsamen leitenden Material besteht und zwei Enden aufweist, die mit dem ersten Kontakt (822) bzw. dem zweiten Kontakt (823) verbunden sind,
das biegsame Element (821) ferner eine leitende Feder (8212) umfasst, die sich in dem Hohlraumkörper (8211) befindet und mit dem ersten Kontakt (822) und dem zweiten Kontakt (823) verbunden ist.

2. Polkomponente (80) nach Anspruch 1, **dadurch gekennzeichnet, dass** das Polkomponente (80) eine Polplatte (83) mit einer Aufnahmekammer (831) umfasst, wobei zwei Enden der Aufnahmekammer (831) jeweils ein Führungsloch definieren, der Pol (81) durch die Aufnahmekammer (831) verläuft und zwei Enden des Pols (81) aus zwei Führungslöchern herausgeführt sind.

3. Polkomponente (80) nach Anspruch 2, **dadurch gekennzeichnet, dass** die Polkomponente eine Isolierbuchse (84) umfasst, wobei die Isolierbuchse (84) mit der Polplatte (83) verbunden ist und darin einen Hohlraum (841) definiert, und die leitende Verbindung (82) in dem Hohlraum (841) angeordnet ist.

4. Polkomponente (80) nach Anspruch 3, **dadurch gekennzeichnet, dass** die Isolierbuchse (84) mit einem wellenförmigen Abschnitt (842) versehen ist und/oder die Isolierbuchse (84) durch Einschnappen mit der Polplatte (83) verbunden ist.

5. Polkomponente (80) nach Anspruch 1, **dadurch gekennzeichnet, dass** der Hohlraumkörper (8211) mit dem ersten Kontakt (822) und dem zweiten Kontakt (823) verpresst oder verschweißt ist.

6. Polkomponente (80) nach Anspruch 1, **dadurch gekennzeichnet, dass** der Pol (81) ein an die leitende Verbindung (82) angrenzendes Ende aufweist und das Ende eine Außenwand hat, die mit einem Begrenzungsabschnitt versehen ist, wobei der Begrenzungsabschnitt ein erstes Ende hat, das mit einer Außenfläche des Pols (81) verbunden ist, und ein zweites Ende, das sich in einer radialen Richtung des Pols (81) erstreckt und vorsteht, und wobei der Begrenzungsabschnitt außerhalb der Aufnahmekammer (831) angeordnet ist und an einer Außenfläche der Aufnahmekammer (831) anliegt.

7. Polkomponente (80) nach Anspruch 6, **dadurch gekennzeichnet, dass** der Mast (81) eine mit einer Ringnut versehene Außenwand aufweist und der Begrenzungsabschnitt ein in die Ringnut eingebetteter Sprengring (813) ist.

8. Polbauteil (80) nach Anspruch 7, **dadurch gekennzeichnet, dass** der Pol (81) an der Außenwand mit einem Vorsprung (814) versehen ist, der Vorsprung (814) sich in radialer Richtung des Pols (81) nach außen erstreckt und vorsteht, der Vorsprung (814) durch das Führungsloch verläuft, die Polkomponente (80) einen elastischen Körper umfasst, der elastische Körper in der Aufnahmekammer (831) und zwischen dem Begrenzungsabschnitt und dem Vorsprung (814) angeordnet ist, und der elastische Körper zwei Enden aufweist, die an einer Innenwand der Aufnahmekammer (831) bzw. dem Vorsprung (814) anliegen.

9. Polkomponente (80) nach einem der Ansprüche 1 bis 8, **dadurch gekennzeichnet, dass** der erste elektrische Verbindungsabschnitt (811) mit mindestens einer Anbringungskammer (8111) versehen ist, das leitende elastische Element einen Kontaktabschnitt und einen Druckabschnitt aufweist, der Druckabschnitt in der Anbringungskammer (8111) angebracht ist und der Kontaktabschnitt aus einer Außenfläche des ersten elektrischen Verbindungsabschnitts (811) herausragt,
vorzugsweise ist das leitende elastische Element eine erste leitende Feder;
noch bevorzugter ist mindestens eine zweite leitende Feder (8221) zwischen dem Pol (81) und dem ersten Kontakt (822) vorgesehen und gepresst, der zweite elektrische Verbindungsabschnitt (812) ist mit einem ersten Hohlraumabschnitt versehen, der erste Kontakt (822) hat eine Außenwand, die mit mindestens einer ersten ringförmigen Federnut versehen ist, und die zweite leitende Feder (8221) ist zwischen dem ersten Hohlraumabschnitt und der ersten ringförmigen Federnut vorgesehen und gepresst.

10. Hochspannungsanordnung (63), **dadurch gekennzeichnet, dass** die Hochspannungsanordnung (63) die Polkomponente (80) nach einem der Ansprüche 1 bis 9 umfasst, wobei ein Hochspannungsstift (631) mit der leitenden Verbindung (82) elektrisch verbunden ist, mindestens ein leitfähiger elastischer Körper vorgesehen ist und zwischen den Hochspannungsstift (631) und die leitfähige Verbindung (82) gepresst wird, und der leitfähige elastische Körper dazu dient, die elektrische Verbindung zwischen dem Hochspannungsstift (631) und der leitfähigen Verbindung (82) im Falle eines Schwebens zwischen dem Hochspannungsstift (631) und der leitfähigen Verbindung (82) aufrecht zu erhalten.

11. Hochspannungsanordnung (63) nach Anspruch 10, **dadurch gekennzeichnet, dass** der Hochspannungsstift (631) mit der leitenden Verbindung (82) mittels einer Buchse verbunden ist, zwei Enden der Buchse jeweils mit einem zweiten Hohlraumabschnitt versehen sind, eine Außenwand des Hochspannungsstifts (631) und eine Außenwand der leitenden Verbindung (82) jeweils mindestens eine zweite ringförmige Federnut definieren und der leitende elastische Körper zwischen dem zweiten Hohlraumabschnitt und der zweiten ringförmigen Federnut gepresst ist;
und/oder der leitfähige elastische Körper eine dritte leitfähige Feder (8231) ist.

12. Elektrischer Verbinder, **dadurch gekennzeichnet, dass** der elektrische Verbinder die Hochspannungsanordnung (63) nach einem der Ansprüche 10 bis 11 umfasst.

## Revendications

1. Composant de pôle (80) pour un ensemble haute tension pour charger des véhicules électriques, comprenant :
un pôle (81), un joint conducteur (82) et au moins un élément élastique conducteur pour réaliser une connexion flottante entre le pôle (81) et une extrémité de batterie de connecteur électrique (70),
dans lequel le pôle (81) présente deux extrémités pourvues respectivement d'une première partie de connexion électrique (811) et d'une seconde partie de connexion électrique (812) , la première partie de connexion électrique (811) est connectée électriquement à l'élément élastique conducteur,
le joint conducteur (82) comprend un élément flexible (821) et un premier contact (822), et le premier contact (822) présente une première extrémité connectée à l'élément flexible (821) et une seconde extrémité connectée électriquement à la seconde partie de connexion électrique (812) ;
le joint conducteur (82) comprend en outre un second contact (823) pour connecter une broche haute tension (631), et l'élément flexible (821) présente deux extrémités connectées respectivement au premier contact (822) et au second contact (823) ;
**caractérisé en ce que** l'élément flexible (821) comprend un corps de cavité (8211) constitué d'un matériau conducteur flexible et présentant deux extrémités connectées respectivement au premier contact (822) et au second contact (823), et
l'élément flexible (821) comprend en outre un ressort conducteur (8212) situé dans le corps de cavité (8211) et connecté au premier contact (822) et au second contact (823).

2. Composant de pôle (80) selon la revendication 1, **caractérisé en ce que** le composant de pôle (80) comprend une plaque de pôle (83) présentant une chambre de réception (831), chacune des deux extrémités de la chambre de réception (831) définit un trou de guidage, le pôle (81) s'étend à travers la chambre de réception (831), et deux extrémités du pôle (81) sont exposées à l'extérieur de deux trous de guidage.

3. Composant de pôle (80) selon la revendication 2, **caractérisé en ce que** le composant de pôle comprend une douille isolante (84), la douille isolante (84) est connectée à la plaque de pôle (83) et définit une cavité (841) en son sein, et le joint conducteur (82) est situé dans la cavité (841).

4. Composant de pôle (80) selon la revendication 3, **caractérisé en ce que** la douille isolante (84) est pourvue d'une partie ondulée (842), et/ou la douille isolante (84) est connectée à la plaque de pôle (83) par encliquetage.

5. Composant de pôle (80) selon la revendication 1, **caractérisé en ce que** le corps de cavité (8211) est serti ou soudé au premier contact (822) et au second contact (823).

6. Composant de pôle (80) selon la revendication 1, **caractérisé en ce que** le pôle (81) présente une extrémité adjacente au joint conducteur (82), et l'extrémité présente une paroi extérieure pourvue d'une partie de limitation, la partie de limitation présente une première extrémité connectée à une surface extérieure du pôle (81) et une seconde extrémité s'étendant et faisant saillie dans une direction radiale du pôle (81), et la partie de limitation est située à l'extérieur de la chambre de réception (831) et vient en butée contre une surface extérieure de la chambre de réception (831).

7. Composant de pôle (80) selon la revendication 6, **caractérisé en ce que** le pôle (81) présente une paroi extérieure pourvue d'une rainure annulaire, et la partie de limitation est un circlip (813) incorporé dans la rainure annulaire.

8. Composant de pôle (80) selon la revendication 7, **caractérisé en ce que** le pôle (81) présente la paroi externe pourvue d'une saillie (814), la saillie (814) s'étend et fait saillie vers l'extérieur dans la direction radiale du pôle (81), la saillie (814) s'étend à travers le trou de guidage, le composant de pôle (80) comprend un corps élastique, le corps élastique est situé dans la chambre de réception (831) et situé entre la partie de limitation et la saillie (814), et le corps élastique présente deux extrémités venant en butée respectivement contre une paroi interne de la chambre de réception (831) et de la saillie (814).

9. Composant de pôle (80) selon l'une quelconque des revendications 1 à 8, **caractérisé en ce que** la première partie de connexion électrique (811) est pourvue d'au moins une chambre de mise en place (8111), l'élément élastique conducteur présente une partie de contact et une partie de pression, la partie de pression est montée dans la chambre de mise en place (8111), et la partie de contact est exposée à l'extérieur d'une surface extérieure de la première partie de connexion électrique (811) ;
de préférence, l'élément élastique conducteur est un premier ressort conducteur ;
de manière plus préférée, au moins un deuxième ressort conducteur (8221) est prévu et pressé entre le pôle (81) et le premier contact (822), la seconde partie de connexion électrique (812) est pourvue d'une première partie de cavité, le premier contact (822) présente une paroi externe pourvue d'au moins une première rainure de ressort annulaire, et le deuxième ressort conducteur (8221) est prévu et pressé entre la première partie de cavité et la première rainure de ressort annulaire.

10. Ensemble haute tension (63), **caractérisé en ce que** l'ensemble haute tension (63) comprend le composant de pôle (80) selon l'une quelconque des revendications 1 à 9, dans lequel une broche haute tension (631) est connectée électriquement au joint conducteur (82), au moins un corps élastique conducteur est prévu et pressé entre la broche haute tension (631) et le joint conducteur (82), et le corps élastique conducteur est utilisé pour maintenir une connexion électrique entre la broche haute tension (631) et le joint conducteur (82) en cas de flottaison entre la broche haute tension (631) et le joint conducteur (82).

11. Ensemble haute tension (63) selon la revendication 10, **caractérisé en ce que** la broche haute tension (631) est connectée au joint conducteur (82) au moyen d'une douille, deux extrémités de la douille sont pourvues chacune d'une seconde partie de cavité, une paroi extérieure de la broche haute tension (631) et une paroi extérieure du joint conducteur (82) définissent chacune au moins une seconde rainure de ressort annulaire, et le corps élastique conducteur est pressé entre la seconde partie de cavité et la seconde rainure de ressort annulaire ;
et/ou le corps élastique conducteur est un troisième ressort conducteur (8231).

12. Connecteur électrique, **caractérisé en ce que** le connecteur électrique comprend l'ensemble haute tension (63) selon l'une quelconque des revendications 10 à 11.
